# EUROPEAN PATENT APPLICATION

(11) **EP 3 147 537 A1**
(43) Date of publication of application: **29.03.2017**
(21) Application number: 16188645.2
(22) Date of filing: 13.09.2016
(51) Int. Cl.: F16F 15/08

(54) **RUGGED ELECTRONIC DEVICES**

(30) Priority: 14.09.2015 GB 201516250
(71) Applicant: DRS Technologies UK Limited, Farnham, Surrey GU10 5EH (GB)
(72) Inventor: Lewis, Toby Graham, Farnham, Surrey GU10 5EH (GB)
(74) Representative: Cleveland

(57) **Abstract**

A rugged electronic device for mounting in a military vehicle, the device comprising a housing 1, a display panel 4 disposed within the housing 1 and a support structure 5 of resilient material via which the display panel 4 is supported within and relative to the housing 1 so as to protect the display panel from vibration. The support structure is arranged for controlling movement of the display panel 4 within the housing 1 in each orthogonal linear direction and comprises a plurality of support portions 51. Each support portion 51 can comprise an elongate beam 51 a and a plurality of projecting support column portions 51 b arranged so that one of the beam and plurality of support column portions acts on the display panel and the other of the beam and plurality of support column portions acts on the housing.

## Description

This invention relates to rugged electronic devices for mounting in military vehicles. In particular it relates to devices including display panels such as display units.

In this specification we use "vehicle" in a broad sense to include aircraft, boats, ships and so on as well as land based vehicles.

As is well understood, rugged electronic devices are often used in military vehicles of all of these types and these need to be constructed in a way so as to survive the harsh environment in which they are used. This specification relates to the particular class of electronic devices including display panels, for example LCD display panels. Thus of particular interest are rugged display units. However, the present invention is also relevant to other rugged electronic devices including display panels.

Rugged display units or other such rugged electronic devices are often mounted in a military vehicle via external shock mounts. This can serve to protect the rugged electronic device from shock and vibration. However, the use of shock mounts has disadvantages. These external components are relatively bulky as well as being expensive. Thus, the provision of external shock mounts can take up an undesirable amount of space within a military vehicle where this is at a premium. This might mean, for example, that a display ends up being much closer to the user than would be desirable. Thus it would be desirable to have an alternative form of protection for rugged electronic display devices.

As part of looking for such an alternative it has been determined by the applicants that display panels used in such devices, say for example LCD displays, are particularly at risk of damage due to vibration and/or shock.

According to a first aspect of the invention there is provided a rugged electronic device for mounting in a military vehicle, the device comprising a housing, a display panel disposed within the housing and a support structure of resilient material via which the display panel is supported within and relative to the housing so as to protect the display panel from vibration.

The support structure may be of damped and resilient material. The support structure may be of vibration reducing material.

The support structure may be a vibration reducing support structure.

Such an arrangement can allow the provision of compact and cost effective rugged devices including displays, particularly display units, which may be mountable directly in a military vehicle without external shock mounts whilst giving protection to the display panel.

Both the resilient nature of the material of the support structure and its configuration can contribute to vibration reduction. Performance can be improved by striking a balance between adequately supporting and maintaining within safe limits movement of the display panel whilst not unnecessarily transmitting vibrational energy to the display panel.

In some embodiments the support structure may be of a single material and/or may be provided in a single piece. In other embodiments the support structure may comprise a plurality of materials and/or may comprise a plurality of pieces.

The support structure may be arranged for controlling movement of the display panel within the housing in each orthogonal direction.

The support structure may comprise a plurality of support portions.

At least one respective support portion may be provided for controlling movement of the display panel within the housing in each orthogonal direction.

As an example, a pair of support portions may be provided to support the display panel so as to control forward and backward movement of the display panel within the housing;
a pair of support portions may be provided to support the display panel so as to control up and down movement of the display panel within the housing;
a pair of support portions may be provided to support the display panel so as to control side to side movement of the display panel within the housing.

Forward and backward movement may also be described as movement perpendicular to a plane of the display panel. Up and down, and side to side movement may also be described as parallel to a plane of the display panel.

At least some of the plurality of support portions may be arranged as a frame around the display panel.

The display panel may have at least one ear portion provided on an edge of the display panel which ear portion is supported by at least one support portion of the support structure to support the display panel so as to control forward and backward movement of the display panel within the housing.

There may be two sets of support portions, a first set arranged as a first frame and a second set arranged as a second frame, with the display panel held between the first and second frames to support the display panel so as to control forward and backward movement of the display panel within the housing. Or to put this another way, to control movement perpendicular to a plane of the display panel.

The at least one ear portion provided on an edge of the display panel may be sandwiched between the first and second frames.

The first frame and/or the second frame may also support the display panel so as to control up and down and side to side movement of the display panel within the housing. Or to put this another way, to control movement parallel to a plane of the display panel.

Each support portion may comprise an elongate beam and a plurality of projecting support column portions arranged so that one of the beam and plurality of support column portions acts on the display panel and the other of the beam and plurality of support column portions acts on the housing.

Each support portion may comprise a display panel contact portion for acting on the display panel and at least one support column portion projecting from the display panel contact portion and for supporting the display panel contact portion away from the housing.

Preferably each support portion comprises a plurality of support column portions.

The display panel contact portion may comprise a beam which is arranged to run along the edge of the display panel.

Such an arrangement, with a plurality of discrete support columns providing support to the display panel, can help give a desired degree of support to the display panel whilst also providing desired vibration protection.

The number and/or dimensions of the support columns may be chosen to give desired supporting and vibration resilience and damping characteristics.

The support structure may be arranged so that when the display panel is located in position in the support structure and the support structure is in position in the housing, the support structure is subject to pre-loading to help hold the display panel in position. In particular at least one of the support portions may be pre-loaded.

This might be exhibited in bending and/or compression of a portion of the support portion, for example one or more of the support columns, where present, may be in a compressed state when the display panel is located in position in the support structure and the support structure is in position in the housing.

The support structure may be pre-loaded in 1, 2, or 3, and preferably at least 2, orthogonal directions - ie the support structure may be pre-loaded in 2 orthogonal directions which are parallel to a plane of the display panel. This may be exhibited in a plurality of the support columns being in a compressed state due to pre-loading in two orthogonal directions and/or the or each display panel contact portion being in a compressed state due to pre-loading in the third orthogonal direction.

Where there is one or more frame, the or each frame may comprise four support portions each comprising a respective display panel contact portion for acting on a respective edge of the display panel and at least one respective support column portion projecting from the display panel contact portion and for supporting the display panel contact portion away from the housing.

The support structure may comprise at least one bump stop portion for limiting travel of the display panel relative to the housing when the device is subjected to shock. The support structure may comprise four bump stop portions, one provided at each corner of the display panel.

The support portions may be arranged to contact and support the display panel when in a rest position whereas the at least one bump stop portion may be arranged to be spaced from the display panel and/or the housing when in a rest position. In such a case contact between the bump stop portion and display panel and between the bump stop portion and the housing can occur when the device is subjected to sufficient shock. At other times the spacing helps ensure vibration protection.

Where there is one or more frame, the or each frame may comprise four bump stop portions, one provided at the corner of the or each frame. Each support portion may then run between a respective pair of the bump stop portions to form the frame. Equally bump stop portions may be placed symmetrically around the edges of the display panel. Bump stops may or may not be provided to stop movement in directions perpendicular to the plane of the display panel. The or each bump stop portion may also be termed an impact stop portion.

Each end of each support portion in the or each frame may be keyed with a respective one of the bump stop portions.

The resilient material may comprise a foamed elastomeric material or another material exhibiting both resilient (spring) properties and either viscous or frictional damping.

The support structure may comprise at least one foamed elastomeric material portion. The support structure maybe of foamed elastomeric material. The or each support portion may be of foamed elastomeric material. The or each bump stop portion may be of foamed elastomeric material. The support structure may be a foamed elastomeric material support structure. The material, or at least one portion of the material, of the structure may act as a vibration reducing material.

The rugged electronic device may be a rugged display unit for mounting in a military vehicle.

The device may comprise a support structure with characteristics selected so as to provide effective reduction of vibrational energy for at least one vibrational frequency which has been determined to be harmful to the display panel.

The device may comprise a support structure with characteristics selected so that any resonant frequency of the support structure and display panel as a system is away from a resonant frequency of the display panel.

The device may comprise a support structure with characteristics selected so that any resonant frequency of the support structure and display panel as a system is away from at least one frequency of vibration which has been determined will be encountered in the military vehicle in which the rugged electronic device is intended to be installed.

The characteristics of the support structure which may be selected may include one or more of: the material or materials from which the support structure is made, the number of and/or dimensions of the display panel contact portions, the number of and/or dimensions of the support columns.

According to another aspect of the invention there is provided a method of manufacturing a rugged electronic device for mounting in a military vehicle, the device comprising a housing, a display panel disposed within the housing and a support structure of resilient material via which the display panel is supported within and relative to the housing so as to protect the display panel from vibration, the method comprising the steps of:
determing at least one vibrational frequency which is harmful to the display panel; and
selecting characteristics of the support structure so as to provide effective reduction of vibrational energy with said frequency.

In effect this means that the device may be tuned so as to minimise risk of damage to the display panel.

The step of determing at least one vibrational frequency which is harmful to the display panel may comprise determining a resonant frequency of the display panel; and
the step of selecting characteristics of the support structure so as to provide effective reduction of vibrational energy with said frequency may comprise selecting characteristics of the support structure so that any resonant frequency of the support structure and display panel as a system is away from the resonant frequency of the display panel.

The method may comprise the further steps of: determining at least one frequency of vibration which will be encountered in the military vehicle in which the rugged electronic device is to be installed; and selecting characteristics of the support structure so as to provide effective reduction of vibrational energy with said frequency.

The step of selecting characteristics of the support structure so as to provide effective damping of vibrational energy with said frequency may comprise selecting characteristics of the support structure so that any resonant frequency of the support structure and display panel as a system is away from the at least one frequency of vibration which will be encountered in the military vehicle.

The characteristics of the support structure which may be selected may include one or more of: the material or materials from which the support structure is made, the number of and/or dimensions of the display panel contact portions, the number of and/or dimensions of the support columns.

According to another aspect of the invention there is provided a rugged electronic device for mounting in a military vehicle, the device comprising a housing, a display panel disposed within the housing and a vibration damping support structure of resilient material via which the display panel is supported within and relative to the housing.

According to another aspect of the invention there is provided a rugged electronic device for mounting in a military vehicle, the device comprising a display panel disposed within a housing wherein the display panel is supported within and relative to the housing via at least one vibration reduction support portion.

According to another aspect of the invention there is provided a rugged electronic device for mounting in a military vehicle comprising:
a housing;
a display panel mounted within the housing; and
at least one shock absorption portion provided between the housing and the display panel.

Each of the optional features following the first aspect of the invention are equally applicable as optional features of the other aspects of invention and could be rewritten here with any necessary changes in wording, these are not rewritten here merely in the interests of brevity.

Embodiments of the present invention will now be described, by way of example only, with reference to the accompanying drawings in which;
Figure 1 schematically shows a rugged electronic device in the form of a rugged display unit;
Figure 2 is a schematic exploded view of major components of the display unit shown in Figure 1;
Figure 3 is a schematic section of a portion of the display unit shown in Figures 1 and 2;
Figure 4A is a rear view of the display unit of Figures 1 to 3 with a back plate removed;
Figure 4B is a detail showing a portion of the display unit with the back plate removed as shown in Figure 4A;
Figure 5 schematically shows a display panel and associated support structure of the display unit shown in Figures 1 to 3; and
Figure 6 is a schematic exploded view of the display panel and support structure as shown in Figure 5.

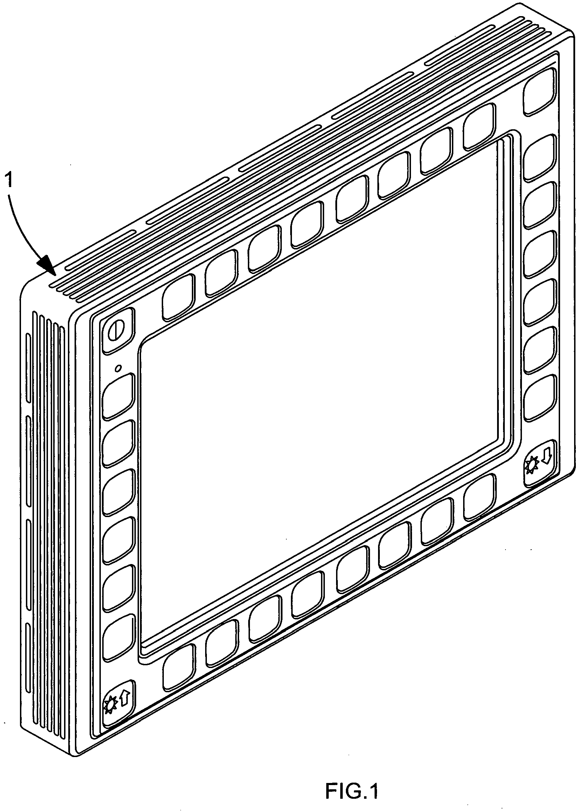

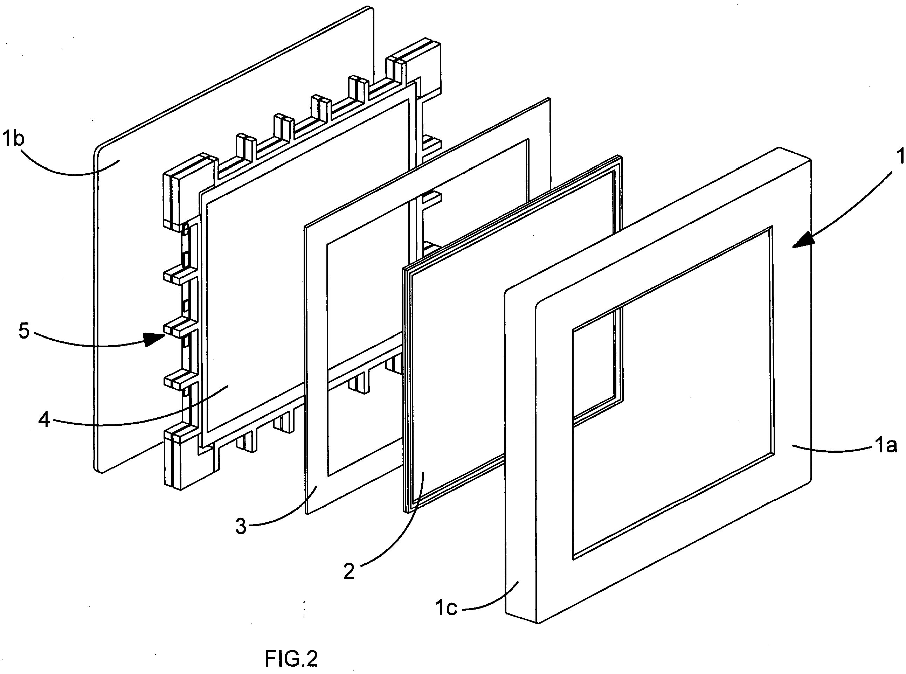

Figure 1 schematically shows a rugged electronic device in the form of a rugged display unit. Figure 2 shows major components of the rugged display unit of Figure 1 in an exploded view.

Referring to Figures 1 and 2, the rugged display unit comprises a housing 1 made up of a front bezel 1 a and a back plate 1 b. Disposed within the housing 1 is a touch screen 2 mounted in the front bezel 1 a and held in position by a clamp plate 3 as well as a LCD display panel 4 and associated support structure 5. With the display unit in its assembled state, the display panel 4 is held in position by virtue of the support structure 5 being held between the clamp plate 3 and the back plate 1 b as well as being housed within the sidewalls 1 c of the housing 1, in particular, in this embodiment, within the sidewalls 1 c of the front bezel 1 a.

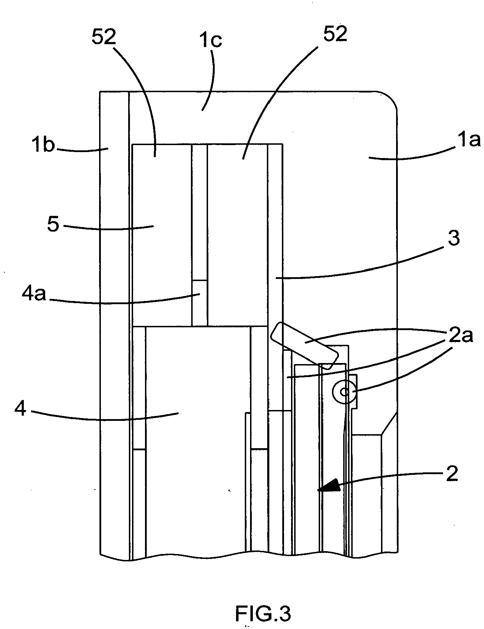

Figure 3 schematically shows a section through a portion of the display unit in its assembled state. Here the support structure 5 can be seen clamped between the clamp plate 3 and the back plate 1 b.

Further, as can be seen in Figure 3, the touch screen 2 is held in position via three seals 2a which are shown in their uncompressed state for illustrative purposes in Figure 3. These seals help to support the touch screen against the effects of vibration and shock as well as providing an environmental seal against the ingress of dust, liquid or so on into the display unit. Note that in alternatives a touch screen might be omitted, and might say be replaced by a simple clear screen.

In further alternatives, the housing may have more depth and a second clamp plate may be provided to perform the clamping function in the place of the back plate 1 b with the back plate then providing a further accommodation region within the housing and fitting over the second clamp plate. In some such alternatives, the second clamp plate may be a printed circuit board (PCB). In general the PCB will then have its electronic components mounted on the face of the PCB which faces away from the display panel 4 such that they are housed within the accommodating region provided by such a modified back plate.

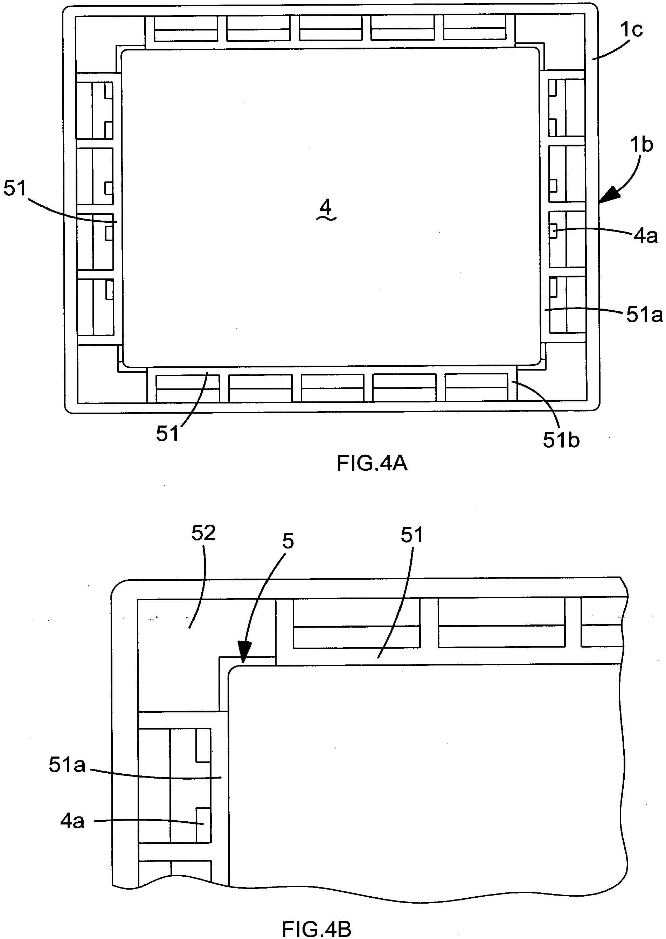

The present specification relates primarily to the mounting of the display panel 4 within the display unit and this will be described in more detail below with reference to the above Figures as well as the remaining Figures 4 to 6.

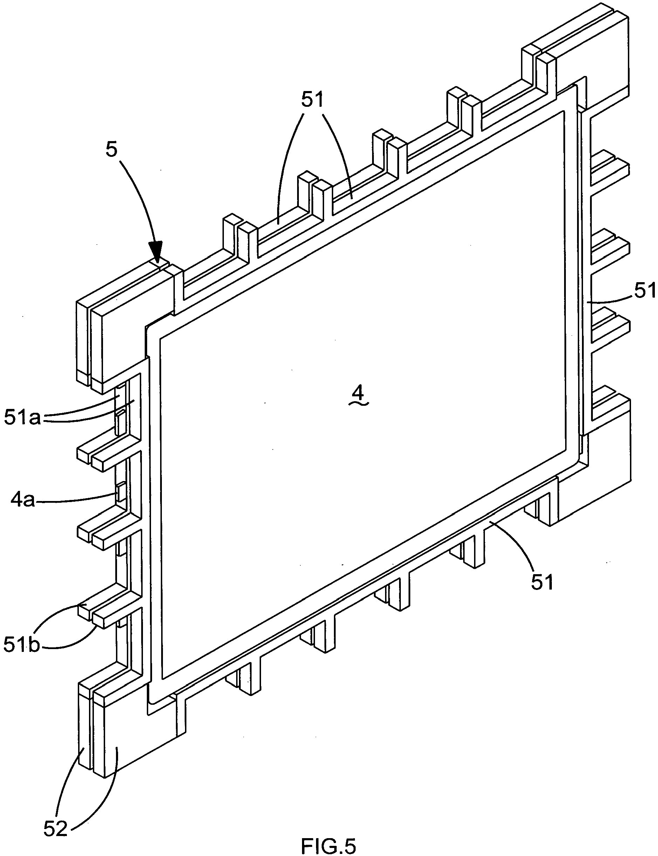

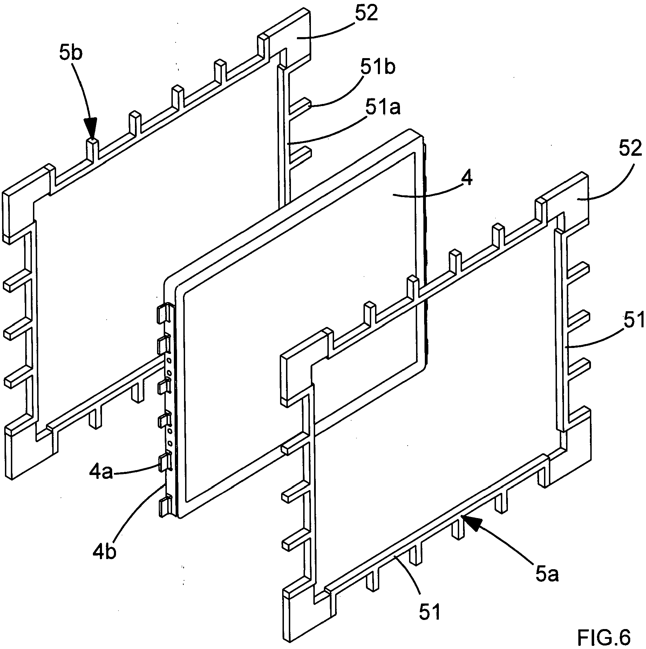

Figure 4A shows the display unit from the rear with the back plate 1 b removed. Thus, here the display panel 4 supported within the support structure 5 can be seen located within the sidewalls 1 c of the front bezel 1 a. Figure 4B shows at a larger scale one of the corners of the display unit as shown in Figure 4A. On the other hand Figure 5 shows the display panel 4 and support structure 5 in isolation and Figure 6 is an exploded view of the sub assembly shown in Figure 5.

As most easily seen in Figure 6, the display panel 4 comprises a plurality of projecting ear portions 4a which are used in supporting the display panel 4 within the support structure 5 and hence within the housing 1 as a whole. In the present embodiment ear portions 4a are provided at two opposing edges of the display panel 4. It will be appreciated however that in alternatives such ear portions might be provided in differing numbers or in differing locations on the edges of the display panel. Further, in some cases, the ear portions may form an integral part of the remainder of the display panel 4, whilst in other circumstances, such as in the present embodiment, the ear portions 4a may be provided as part of a bracket 4b which is mounted on the remainder of the display panel. Thus, for example, a standard, commercially available, display panel may be used and brackets 4b added to that to facilitate use of the mounting arrangement of the present specification.

In the present embodiment, the support structure 5 comprises two frames 5a, 5b which are shown separated from one another in Figure 6. In the present embodiment each of the frames is identical to the other. However, in alternatives, frames which differ from one another may be provided and a different number of frames might be used to conveniently provide the correct thickness for the support structure 5 relative to the display panel 4 and the housing 1.

Each frame 5a, 5b comprises four support portions 51 and four bump stop portions 52. Each support portion 51 comprises a display panel contact portion 51 a and a plurality of support column portions 51 b. Each display panel contact portion 51 a is arranged as a beam which runs along an edge of, and is in contact with, an edge of the display panel 4 in the assembled state as shown for example in Figure 4A.

Again as can be seen in Figure 4A, each display panel contact portion 51 a is spaced from the housing 1, in particular from the sidewall 1 c of the housing 1, by the plurality of support columns 51 b. The display panel 4 is supported within the housing 1 by virtue of the support columns 51 b acting on the wall 1 c of the housing and the display panel contact portion 51 a acting on the edge of the display panel. Furthermore, the support structure 5 and in particular the support portions 51 are dimensioned so that when the display panel 4 and support structure 5 are fitted into the housing 1, in particular, fitted between the sidewalls 1 c, the support structure 5 is subjected to preloading to adequately grip/hold the display panel 4 within the housing. This preloading gives rise to compression of the support portions 51 in particular compression of each support column 51 b.

The provision of discrete support columns 51 b rather than continuous blocks of support material helps give improved vibration and shock protection.

In the present embodiment both of the frames 5a, 5b act on the edge of the display panel 4 in this way. In some alternatives however there may be a situation where only one frame acts on the edge of the display panel. Similarly there may be a situation where more than two frames act on the edge of the display panel. Of course in some cases a different structure not including frames may be used. Also, in some cases the orientation of the support portions could be reversed with the beam contacting the housing and the support columns contacting the display panel.

The arrangement described above gives rise to support of the display panel 4 in two orthogonal directions within the housing 1 and controls movement in those directions. Correspondingly there is preloading of the support structure 5 and in particular the support portions 51 in these two directions. These two orthogonal directions may be described as side to side and up and down, or parallel to a plane of the display panel 4.

On the other hand, as alluded to above, support of the display panel 4 in the remaining orthogonal direction (as might be termed backward and forward or perpendicular to the plane of the display panel 4) is provided by virtue of the fact that the display panel 4 is sandwiched between the frames 5a and 5b. In particular the projecting ear portions 4a are sandwiched between respective display panel contact portions 51 a of the support portions 51 which run along the relevant edges of the display panel 4. Further, in the assembled state as shown in Figure 3, these display panel contact portions 51 a are held between the clamp plate 3 on one hand and the back plate 1 b on the other hand. Again in the present embodiment, the support structure 5 may be subject to preloading in this third orthogonal (backward and forward) direction such that the display panel contact portions 51 a, at least in the region of the ear portions 4b, are in a compressed state at assembly.

Whilst the support portions 51 of the support structure 5 are arranged for contacting with the display panel 4 on assembly and when the display panel is in a rest position, the bump stop portions 52 are arranged to be spaced from the edge of the display panel 4 when the display panel 4 is in a rest position. Thus, as can be seen most clearly in Figure 4B, there is a spacing S between each bump stop portion 52 and display panel 4. This means that except when the device is subjected to large shock loads, there will be no contact between the display panel 4 and the bump stop portions 52. This can be helpful in controlling the amount of vibrational energy which is transmitted from the housing 1 to the display panel 4.

To some degree the display panel 4 is allowed to float within the housing 1 due to the structure and arrangement of the support portions 51 whereas overall travel can be limited by the bump stop portions 52 which are more rigid (although still generally resilient) in nature. This additional rigidity may be purely because of the shape of the bump stop portion 52 or because a different material is chosen for the bump stop portions 52 compared with the support portions 51. Thus for example, the bump stop portions 52 may be of a material which is chosen so as to be effective at absorbing shocks whereas the support portions 51 may be chosen to be of materials which are effective for absorbing vibration.

Materials with both resilient (springy) and damping properties have been found to be particularly effective for use as one or other of, or both of, the support portions 51 and bump stop portions 52 of the support structure 5.

As well as these different materials, the dimensions of the support portions 51 as well as the number of support columns 51 b provided can be selected to give desired support and vibration reduction characteristics.

Note that the size, number and position of the ear portions 4a may also be selected in order to help give the desired vibration protection and damping characteristics in the corresponding orthogonal direction.

The number of, and dimensions of, the support columns 51 b are generally most usefully altered for achieving these different desirable characteristics. The total cross-sectional area of the support columns along one support portion 51 will generally have the largest effect on the vibration transmission and damping characteristics. The number of support columns provided to give, in aggregate, this amount of cross-sectional area may be more influenced by other factors such as the internal shape and structure of the housing (which might vary) and giving adequate at rest support for the display panel.

By choosing these characteristics, in particular, the number and dimensions of the support columns, it is possible to tune the behaviour of the display unit. In particular resonant frequencies of the display unit, in particular a resonant frequency of the display panel and support structure as a system, can be modified by changing the characteristics of the support structure namely the materials from which it is constructed and the shape, dimensions and numbers of components in particular support columns.

It will be understood that here by "resonant frequencies" we are referring to resonant frequencies of physical vibration of components.

In manufacturing a device, vibrational frequencies which are determined to be harmful to the display panel and/or vibrational frequencies which are known will be present in the military vehicle in which the display unit is to be mounted can be considered. Then the design of the display unit may be made such that the characteristics of the support structure 5 are chosen so that good vibration reduction is provided at frequencies which are known to be harmful for the display panel 4 and/or at frequencies of vibration which it is known will occur in the environment in which the display unit is to be mounted. As an example, the resonant frequency of the display panel 4 and support structure 5 as a system may be selected so as to be away from frequencies of vibration which are known to damage the display panel 4 and/or away from frequencies which it is known will be experienced in the military vehicle in which the display unit is to be installed.

## Claims

1. A rugged electronic device for mounting in a military vehicle, the device comprising a housing, a display panel disposed within the housing and a support structure of resilient material via which the display panel is supported within and relative to the housing so as to protect the display panel from vibration.

2. A rugged electronic device according to claim 1 in which the support structure comprises a plurality of support portions.

3. A rugged electronic device according to claim 2 in which at least one respective support portion is provided for controlling movement of the display panel within the housing in each orthogonal direction.

4. A rugged electronic device according to claim 2 or 3 in which each support portion comprises an elongate beam and a plurality of projecting support column portions arranged so that one of the beam and plurality of support column portions acts on the display panel and the other of the beam and plurality of support column portions acts on the housing.

5. A rugged electronic device according to any one of claims 2 to 4 in which each support portion comprises a display panel contact portion for acting on the display panel and at least one support column portion projecting from the display panel contact portion and for supporting the display panel contact portion away from the housing.

6. A rugged electronic device according to any preceding claim in which the display panel has at least one ear portion provided on an edge of the display panel which ear portion is supported by at least one support portion of the support structure to support the display panel so as to control forward and backward movement of the display panel within the housing.

7. A rugged electronic device according to any preceding claim in which there are two sets of support portions, a first set arranged as a first frame and a second set arranged as a second frame, with the display panel held between the first and second frames to support the display panel so as to control forward and backward movement of the display panel within the housing.

8. A rugged electronic device according to claim 7 when dependent on claim 6 in which the at least one ear portion provided on an edge of the display panel is sandwiched between the first and second frames.

9. A rugged electronic device according to claim 7 or claim 8 in which the first frame and/or the second frame also supports the display panel so as to control up and down and side to side movement of the display panel within the housing.

10. A rugged electronic device according to any preceding claim in which the support structure comprises at least one bump stop portion for limiting travel of the display panel relative to the housing when the device is subjected to shock.

11. A rugged electronic device according to claim 10 in which the support structure comprises four bump stop portions, one provided at each corner of the display panel.

12. A rugged electronic device according to claim 10 or claim 11 in which the support portions are arranged to contact and support the display panel when in a rest position whereas the at least one bump stop portion is arranged to be spaced from the display panel when in a rest position.

13. A rugged electronic device according to any preceding claim in which the support structure has characteristics selected:
i) so as to provide effective reduction of vibrational energy with at least one vibrational frequency which has been determined to be harmful to the display panel; and/or
ii) so that any resonant frequency of the support structure and display panel as a system is away from a resonant frequency of the display panel; and/or
iii) so that any resonant frequency of the support structure and display panel as a system is away from at least one frequency of vibration which has been determined will be encountered in the military vehicle in which the rugged electronic device is intended to be installed.

14. A method of manufacturing a rugged electronic device for mounting in a military vehicle, the device comprising a housing, a display panel disposed within the housing and a support structure of resilient material via which the display panel is supported within and relative to the housing so as to protect the display panel from vibration, the method comprising the steps of:
determing at least one vibrational frequency which is harmful to the display panel; and
selecting characteristics of the support structure so as to provide effective damping of vibrational energy with said frequency.

15. A method of manufacturing a rugged electronic device according to claim 14 in which at least one of:
i) the step of determing at least one vibrational frequency which is harmful to the display panel comprises determining a resonant frequency of the display panel; and
the step of selecting characteristics of the support structure so as to provide effective damping of vibrational energy with said frequency comprises selecting characteristics of the support structure so that any resonant frequency of the support structure and display panel as a system is away from the resonant frequency of the display panel;
ii) the method comprises the further steps of: determining at least one frequency of vibration which will be encountered in the military vehicle in which the rugged electronic device is to be installed; and selecting characteristics of the support structure so as to provide effective damping of vibrational energy with said frequency; and
iii) the step of selecting characteristics of the support structure so as to provide effective damping of vibrational energy with said frequency comprises selecting characteristics of the support structure so that any resonant frequency of the support structure and display panel as a system is away from the at least one frequency of vibration which will be encountered in the military vehicle.
